# FASCICULE DE BREVET EUROPEEN

(11) **EP 1 498 626 B1**
(45) Date de publication et mention de la délivrance du brevet: **10.01.2007**
(21) Numéro de dépôt: 04291745.0
(22) Date de dépôt: 08.07.2004
(51) Int. Cl.: F16D 3/205

(54) **Joint homocinétique compact**
Gleichlaufgelenk
Constant velocity joint

(30) Priorité: 16.07.2003 FR 0308687
(43) Date de publication de la demande: 19.01.2005
(73) Titulaire: GKN Driveline International GmbH, 53797 Lohmar (DE)
(72) Inventeur: Margerie, Michel, 95510 Vetheuil (FR); Turbant, Joffrey, 78955 Carrieres Sous Poissy (FR); Chan Tien, Christian, 78570 Andresy (FR); Francois, Marc, 78590 Noisy Le Roi (FR)
(74) Mandataire: Domenego, Bertrand

(56) Documents cités:
- FR-A- 2 807 125
- FR-A- 2 809 145
- US-A1- 2001 046 899
- US-A1- 2003 130 046

## Description

La présente invention concerne un joint homocinétique tel que défini par le préambule de la revendication 1.

Un tel joint est connu du document US-A-2003/130046.

Elle s'applique notamment aux joints homocinétiques à tripode, tels que les joints du type « GI » commercialisés par la société GKN DRIVELINE S.A.

Le document FR-A-2 809 145 décrit un joint homocinétique de ce type dont les proportions dimensionnelles ont des rapports spécifiques, afin de réduire l'encombrement du joint tout en obtenant un équilibre entre sa résistance structurelle et sa durée de vie.

La résistance structurelle du joint désigne les résistances mécaniques des éléments du joint aux sollicitations statiques et dynamiques. La durée de vie du joint désigne la résistance des surfaces de contact des pistes, des galets et des aiguilles à l'usure, telle que l'écaillage.

Selon le document précité, les paramètres influant sur la résistance structurelle sont, entre autres, le diamètre de l'arbre (ds), le diamètre des tourillons, l'épaisseur de paroi des galets et la largeur des galets. Les paramètres influant sur la durée de vie sont le diamètre du cercle primitif des pistes de guidage (PCD), le diamètre des tourillons, la longueur des aiguilles et le diamètre des aiguilles.

Le joint du document FR-A-2 809 145 a un rapport du diamètre de l'arbre (ds) au diamètre du cercle primitif des pistes (PCD) qui est compris entre 0,5 et 0,55. Le rapport de la largeur du galet au diamètre extérieur du galet est égal ou inférieur à 0,32, et de préférence compris entre 0,27 et 0,24. Le rapport du diamètre du tourillon au diamètre du galet est compris entre 0,54 et 0,57.

Ce document décrit que la réduction du rapport de la largeur du galet au diamètre extérieur du galet contribue de manière très importante à la réduction des dimensions.

La présente invention a pour but de proposer un joint homocinétique qui ait un encombrement encore réduit pour une résistance structurelle et une durée de vie données.

A cet effet, l'invention a pour objet un joint homocinétique du type précité, caractérisé par les caractéristiques de la partie caractérisante de la revendication 1.

Selon des modes particuliers de réalisation, le joint selon l'invention comporte l'une ou plusieurs des caractéristiques figurant dans les revendications dépendantes.

L'invention sera mieux comprise à la lecture de la description qui va suivre, donnée uniquement à titre d'exemple et faite en se référant aux dessins annexés, sur lesquels :
- la Figure 1 est une vue en coupe transversale d'un joint homocinétique de l'état de la technique ; et
- la Figure 2 montre un joint homocinétique selon l'invention, la vue étant analogue à celle de la Figure 1.

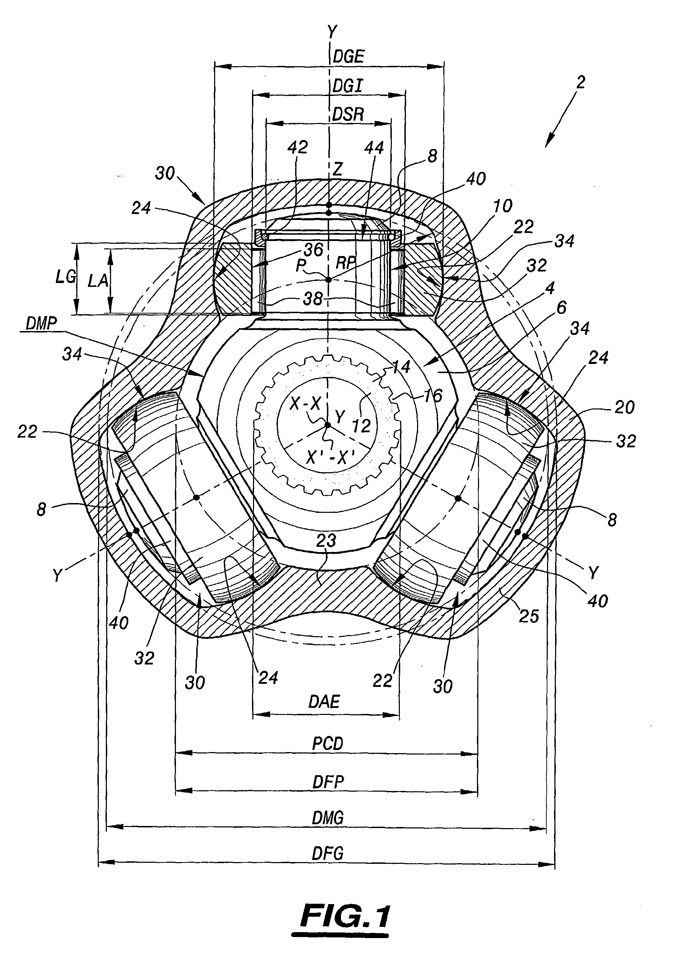

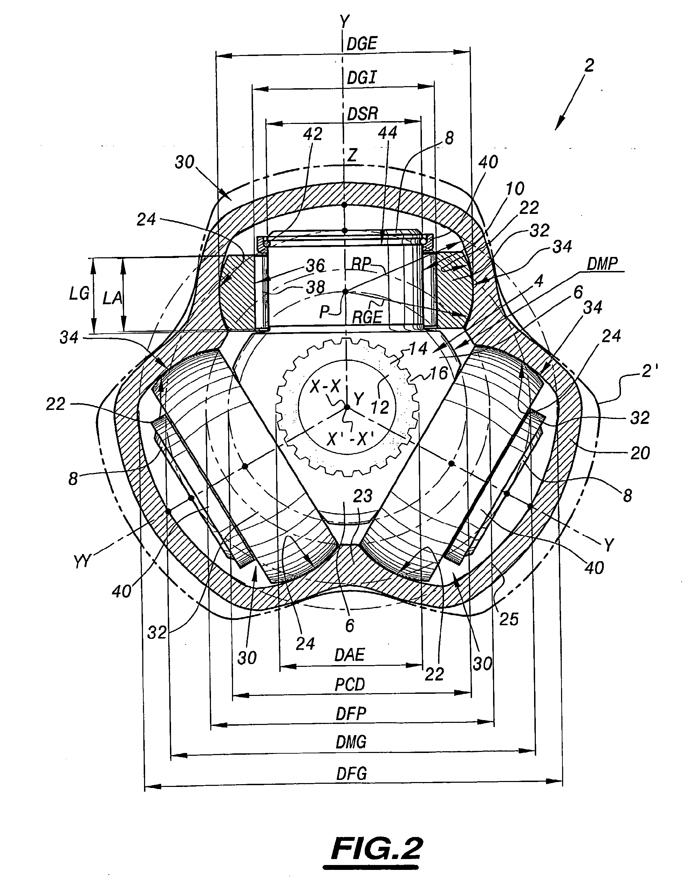

Les deux joints de la Figure 1 et de la Figure 2 ne diffèrent qu'en ce qui concerne leurs proportions géométriques. En conséquence, les éléments analogues de la Figure 1 et de la Figure 2 portent les mêmes références.

Le joint 2 est destiné à une transmission de véhicule automobile et comprend essentiellement les éléments suivants.
(1) Un élément mâle 4 ou tripode, de symétrie ternaire par rapport à un axe central X-X (orthogonal au plan des Figures), qui comprend un moyeu 6 et trois tourillons 8 radiaux d'axe Y-Y espacés angulairement de 120°. Chaque tourillon 8 comporte une surface de roulement 10 sensiblement cylindrique dont le diamètre DSR est centré sur l'axe Y-Y du tourillon 8 respectif. L'élément mâle 4 a un petit diamètre extérieur DMP, qui est défini par le diamètre extérieur du moyeu 6, ainsi qu'un grand diamètre extérieur DMG qui est deux fois la longueur radiale d'un tourillon 8 mesurée depuis l'axe X-X.
   Le moyeu 6 est solidaire d'un premier arbre de rotation 12 au moyen de cannelures 14, 16 complémentaires du moyeu 6 et de l'arbre 12. L'arbre 12 a un diamètre extérieur DAE qui est défini par le diamètre extérieur des cannelures 14 de l'arbre.
   Le tourillon 8 et la surface de roulement 10 sont fixes par rapport au premier axe X-X.
(2) Un élément femelle 20 ou tulipe de symétrie ternaire par rapport à un axe central X'-X', ce dernier étant confondu avec l'axe X-X dans la position alignée représentée du joint 2. De part et d'autre de chaque tourillon 8, la tulipe 20 délimite une paire de pistes 22, 24 de roulement en vis-à-vis. Cet élément femelle 20 est solidaire d'un second arbre de rotation non représenté. La tulipe 20 définit un petit diamètre intérieur DFP qui est deux fois le rayon intérieur des parties 23 s'étendant entre deux paires de pistes 22, 24 adjacentes, et un grand diamètre intérieur DFG, qui est deux fois le rayon intérieur de la voûte 25 située entre les pistes 22, 24 d'une paire de pistes.
   Les pistes 22, 24 ont une section transversale en arc de cercle ayant un rayon RP, centré en un point P pour chaque paire de pistes. Les pistes 22, 24 définissent, de manière connue, un cercle primitif de pistes centré sur l'axe X'-X' et passant par les trois points P. Le diamètre de ce cercle est nommé PCD.
(3) Pour chaque tourillon 8, un organe 30 de transmission mécanique qui comprend un galet 32 d'axe de révolution Z-Z, confondu avec l'axe Y-Y. Le galet 32 est destiné à rouler sur l'une ou l'autre des pistes 22, 24 correspondantes.

Chaque galet 32 comporte une surface extérieure 34 en forme de sphère partielle. La surface extérieure 34 a un diamètre DGE. Le galet 32 comprend en outre une surface de roulement intérieure 36 sensiblement cylindrique d'axe Z-Z et ayant un diamètre DGI. Le galet a une largeur LG, mesurée suivant l'axe Z-Z. Ainsi, le galet 32 est mobile uniquement en rotation autour du second axe X-X et le long de cet axe.

Par ailleurs, l'organe de transmission 30 comprend une couronne d'aiguilles 38 disposée entre le galet 32 et la surface de roulement 10. Les aiguilles 38 roulent d'une part sur la surface de roulement 36 du galet 32 et d'autre part sur la surface de roulement 10 du tourillon 8. La couronne d'aiguilles 38 est axialement retenue sur le tourillon 8 par une bague de retenue 40 et par un anneau fendu 42 encliqueté dans une gorge 44 ménagée dans l'extrémité du tourillon 8. Les aiguilles 38 ont une longueur LA.

Les paramètres influant sur l'encombrement et la durée de vie du joint sont essentiellement la largeur LG du galet 32, le diamètre du cercle primitif des pistes PCD et le diamètre extérieur du galet DGE. Toutefois, l'importance de l'influence sur l'encombrement et sur la durée de vie est différente pour chacun de ces paramètres. Des calculs et des essais exhaustifs ont montré que, de manière surprenante, le paramètre le plus pénalisant pour l'encombrement est le diamètre PCD, mais qu'une réduction de celui-ci n'entraîne qu'une réduction de durée de vie relativement faible, alors que le paramètre qui, parmi les trois paramètres précités, a le moins d'influence sur l'encombrement et le plus d'influence sur la durée de vie est le diamètre extérieur du galet DGE.

Le joint selon l'invention présente donc un rapport du diamètre extérieur de l'arbre DAE au diamètre du cercle primitif des pistes PCD qui est supérieur à 0,55. De préférence, ce rapport est supérieur à 0,56 et inférieur à 0,59.

Le rapport de la largeur LG du galet 32 au diamètre extérieur de galet DGE est compris entre 0,28 et 0,32, et de préférence compris entre 0,30 et 0,31.

Le rapport du diamètre de la surface de roulement DSR au diamètre extérieur de galet DGE est compris entre 0,53 et 0,58.

Par ailleurs, le rapport du diamètre de la surface de roulement DSR au diamètre extérieur de l'arbre DAE est supérieur à 0,86, et de préférence situé entre 0,86 et 0,91. Ceci confère également une durée de vie importante au joint.

Le rapport de la longueur des aiguilles LA au diamètre de la surface de roulement DSR s'élève avantageusement à au moins 0,56 et est inférieur à 0,61, et est de préférence inférieur à 0,58.

Par ailleurs, le rapport du petit diamètre intérieur DFP au grand diamètre intérieur DFG de la tulipe 20 est choisi entre 0,65 et 0,68. Le rapport du petit diamètre DMP de l'élément mâle 4 au grand diamètre DMG de l'élément mâle est choisi entre 0,55 et 0,6, et de préférence entre 0,57 et 0,58.

Le rapport du petit diamètre intérieur de la tulipe DFP au diamètre extérieur de l'arbre DAE est compris entre 1,83 et 1,92. Ainsi, ce rapport est important ce qui conduit à une grande plage dans le diagramme angle de brisure/coulissement tulipe - élément mâle. En d'autres termes, le joint permet un angle de brisure important pour un déplacement relatif donné entre l'élément mâle 4 et l'élément femelle 20.

En outre, le diamètre extérieur DGE du galet est de deux fois un rayon extérieur du galet RGE.

Le rapport du rayon extérieur RGE du galet 32 au rayon RP des pistes 22, 24 est inférieur à 1, de préférence inférieur à 0,997 et notamment inférieur à 0,93. Ce rapport évite une pression de contact importante aux extrémités axiales des surfaces 34 et des pistes 22, 24 et conduit à une génération d'une force de réaction axiale faible et de vibrations faibles.

Sur la Figure 2, le contour du joint de la Figure 1 est indiqué en trait mixte 2'. On voit que le joint selon l'invention est moins encombrant.

Grâce aux proportions précitées, le joint présente un encombrement faible pour une résistance structurelle et une durée de vie données. De plus, le joint selon l'invention génère peu de vibrations et peu de bruit lors de son fonctionnement.

## Revendications

1. Joint homocinétique; du type comprenant
- un élément mâle (4) ayant au moins deux tourillons (8) et un arbre (12) qui s'étend suivant un premier axe (X-X) et qui a un diamètre extérieur DAE, chacun des tourillons (8) étant muni d'une surface de roulement (10) qui s'étend suivant un second axe (Y-Y), notamment perpendiculaire au premier axe (X-X), et qui a un diamètre de surface de roulement DSR,
- pour chaque tourillon (8), un galet (32) monté sur le tourillon (8) en rotation autour du second axe (Y-Y) et libre en coulissement le long de cet axe, le galet (32) ayant un diamètre extérieur DGE, et
- un élément femelle (20) comprenant pour chaque galet (32) une paire de pistes (22, 24) et définissant un cercle primitif de pistes,
le rapport du diamètre extérieur DAE de l'arbre (12) au diamètre PCD du cercle primitif des pistes, dit premier rapport du joint, étant supérieur à 0,55, **caractérisé en ce que** chaque galet (32) a une largeur axiale LG mesurée suivant l'axe du galet (Z-Z), **en ce que** le rapport de la largeur axiale LG au diamètre extérieur DGE du galet (32), dit deuxième rapport du joint, est compris entre 0,28 et 0,32.

2. Joint homocinétique suivant la revendication 1, **caractérisé en ce que** ledit premier rapport est supérieur à 0,56.

3. Joint homocinétique suivant la revendication 1 ou 2, **caractérisé en ce que** ledit premier rapport est inférieur à 0,59.

4. Joint homocinétique suivant l'une quelconque des revendications 1 à 3, **caractérisé en ce que** ledit deuxième rapport est compris entre 0,30 et 0,31.

5. Joint homocinétique suivant l'une quelconque des revendications 1 à 4, **caractérisé en ce que** le rapport du diamètre DSR de la surface de roulement (10) au diamètre extérieur DGE du galet (32), dit troisième rapport du joint, est compris entre 0,53 et 0,58.

6. Joint homocinétique suivant l'une quelconque des revendications 1 à 5, **caractérisé en ce que** le rapport du diamètre DSR de la surface de roulement (10) au diamètre extérieur DAE de l'arbre, dit quatrième rapport du joint, est supérieur à 0,86, et de préférence compris entre 0,86 et 0,91.

7. Joint homocinétique suivant l'une quelconque des revendications 1 à 6, **caractérisé en ce que** des aiguilles (38) sont disposées entre chaque surface de roulement (10) et chaque galet (32), et **en ce que** le rapport de la longueur LA des aiguilles (38) au diamètre DSR de la surface de roulement (10), dit cinquième rapport du joint, est d'au moins 0,56 et inférieur à 0,61, et est de préférence inférieur à 0,58.

8. Joint homocinétique suivant l'une quelconque des revendications 1 à 7, **caractérisé en ce que** le galet (32) a un rayon extérieur RGE, **en ce que** chaque piste (22, 24) a une section transversale ayant un rayon RP, et **en ce que** le rapport du rayon extérieur RGE du galet aux rayons RP des sections transversales, dit sixième rapport du joint, est inférieur à 1, de préférence inférieur à 0,997 et notamment inférieur à 0,93.

9. Joint homocinétique suivant l'une quelconque des revendications 1 à 8, **caractérisé en ce que** l'élément femelle (20) définit un petit diamètre intérieur DFP qui est deux fois le rayon intérieur de parties (23) s'étendant entre deux paires de pistes (22, 24) adjacentes, et **en ce que** le rapport du diamètre DFP au diamètre extérieur de l'arbre DAE, dit septième rapport du joint, est compris entre 1,83 et 1,92.

10. Joint homocinétique suivant l'une quelconque des revendications 1 à 9, **caractérisé en ce que** le galet (32) est mobile uniquement en rotation autour du second axe (Y-Y) et le long de cet axe.

11. Joint homocinétique suivant la revendication 10, **caractérisé en ce que** le galet (32) comporte une surface intérieure sensiblement cylindrique (36), et **en ce que** la surface de roulement (10) du tourillon (8) est une surface sensiblement cylindrique.

12. Joint homocinétique suivant les revendications 7 et 11, **caractérisé en ce que** les aiguilles (38) roulent d'une part sur la surface de roulement (36) du galet (32) et d'autre part sur la surface de roulement (10) du tourillon (8).

13. Joint homocinétique suivant l'une quelconque des revendications 1 à 12, **caractérisé en ce que** le tourillon (8) et la surface de roulement (10) sont fixes par rapport au premier axe (X-X).

14. Joint homocinétique suivant l'une quelconque des revendications précédentes, **caractérisé en ce que** le joint est un joint à tripode.

## Claims

1. Homokinetic joint of the type comprising
- a male element (4) having at least two journals (8) and a shaft (12), which extends along a first axis (X-X) and which has an external diameter DAE, each of the journals (8) being provided with a rolling surface (10) which extends along a second axis (Y-Y), especially perpendicular to the first axis (X-X), and which has a rolling surface diameter DSR,
- for each journal (8), a roller (32) mounted on the journal (8) so as to rotate about the second axis (Y-Y) and slide freely along that axis, the roller (32) having an external diameter DGE, and
- a female element (20) comprising for each roller (32) a pair of pathways (22, 24) and defining a basic circle of pathways,
the ratio of the external diameter DAE of the shaft (12) to the basic circle diameter PCD of the pathways, termed the first ratio of the joint, being greater than 0.55,
**characterised in that** each roller (32) has an axial width LG measured along the axis (Z-Z) of the roller, **in that** the ratio of the axial width LG to the external diameter DGE of the roller (32), termed the second ratio of the joint, is between 0.28 and 0.32.

2. Homokinetic joint according to claim 1, **characterised in that** the said first ratio is greater than 0.56.

3. Homokinetic joint according to claim 1 or 2, **characterised in that** the said first ratio is less than 0.59.

4. Homokinetic joint according to any one of claims 1 to 3, **characterised in that** the said second ratio is between 0.30 and 0.31.

5. Homokinetic joint according to any one of claims 1 to 4, **characterised in that** the ratio of the diameter DSR of the rolling surface (10) to the external diameter DGE of the roller (32), termed the third ratio of the joint, is between 0.53 and 0.58.

6. Homokinetic joint according to any one of claims 1 to 5, **characterised in that** the ratio of the diameter DSR of the rolling surface (10) to the external diameter DAE of the shaft, termed the fourth ratio of the joint, is greater than 0.86, and is preferably between 0.86 and 0.91.

7. Homokinetic joint according to any one of claims 1 to 6, **characterised in that** needles (38) are arranged between each rolling surface (10) and each roller (32) and **in that** the ratio of the length LA of the needles (38) to the diameter DSR of the rolling surface (10), termed the fifth ratio of the joint, is at least 0.56 and less than 0.61, and is preferably less than 0.58.

8. Homokinetic joint according to any one of claims 1 to 7, **characterised in that** the roller (32) has an external radius RGE, **in that** each pathway (22, 24) has a cross-section having a radius RP, and **in that** the ratio of the external radius RGE of the roller to the radii RP of the cross-sections, termed the sixth ratio of the joint, is less than 1, preferably less than 0.997 and especially less than 0.93.

9. Homokinetic joint according to any one of claims 1 to 8, **characterised in that** the female element (20) defines a small internal diameter DFP which is twice the internal radius of parts (23) extending between two pairs of adjacent pathways (22, 24), and **in that** the ratio of the diameter DFP to the external diameter of the shaft DAE, termed the seventh ratio of the joint, is between 1.83 and 1.92.

10. Homokinetic joint according to any one of claims 1 to 9, **characterised in that** the roller (32) is mobile solely in rotation about the second axis (Y-Y) and along that axis.

11. Homokinetic joint according to claim 10, **characterised in that** the roller (32) comprises a substantially cylindrical internal surface (36) and **in that** the rolling surface (10) of the journal (8) is a substantially cylindrical surface.

12. Homokinetic joint according to claims 7 and 11, **characterised in that** the needles (38) roll on the one hand on the rolling surface (36) of the roller (32) and on the other hand on the rolling surface (10) of the journal (8).

13. Homokinetic joint according to any one of claims 1 to 12, **characterised in that** the journal (8) and the rolling surface (10) are fixed in relation to the first axis (X-X).

14. Homokinetic joint according to any one of the preceding claims, **characterised in that** the joint is a tripod joint.

## Patentansprüche

1. Homokinetisches Gelenk, umfassend
- ein Steckelement (4), das mindestens zwei Drehzapfen (8) und eine Welle (12) besitzt, die sich gemäß einer ersten Achse (X-X) erstreckt und die einen Außendurchmesser DAE besitzt, wobei jeder der Drehzapfen (8) mit einer Lauffläche (10) versehen ist, die sich gemäß einer zweiten, insbesondere zur ersten Achse (X-X) senkrechten Achse (Y-Y) erstreckt und die einen Laufflächendurchmesser DSR besitzt;
- für jeden Drehzapfen (8) eine Rolle (32), die auf dem Drehzapfen (8) drehbar um die zweite Achse (Y-Y) montiert ist und längs dieser Achse frei verschiebbar ist, wobei die Rolle (32) einen Außendurchmesser DGE besitzt, und ein Aufnahmeelement 20, das für jede Rolle (32) ein Paar von Bahnen (22, 24) umfasst und einen Bahnen-Wälzkreis definiert,
wobei das Verhältnis des Außendurchmessers DAE der Welle (12) zum Durchmesser PCD des Wälzkreises der Bahnen, erstes Verhältnis des Gelenks genannt, größer als 0,55 ist,
**dadurch gekennzeichnet, dass** jede Rolle (32) eine gemäß der Achse der Rolle (Z-Z) gemessene axiale Breite LG besitzt, dass das Verhältnis der axialen Breite LG zum Außendurchmesser DGE der Rolle (32), zweites Verhältnis des Gelenks genannt, zwischen 0,28 und 0,32 beträgt.

2. Homokinetisches Gelenk nach Anspruch 1, **dadurch gekennzeichnet, dass** das erste Verhältnis größer als 0,56 ist.

3. Homokinetisches Gelenk nach Anspruch 1 oder 2, **dadurch gekennzeichnet, dass** das erste Verhältnis kleiner als 0,59 ist.

4. Homokinetisches Gelenk nach einem der Ansprüche 1 bis 3, **dadurch gekennzeichnet, dass** das zweite Verhältnis zwischen 0,30 und 0,31 beträgt.

5. Homokinetisches Gelenk nach einem der Ansprüche 1 bis 4, **dadurch gekennzeichnet, dass** das Verhältnis des Durchmessers DSR der Lauffläche (10) zum Außendurchmesser DGE der Rolle (32), drittes Verhältnis des Gelenks genannt, zwischen 0,53 und 0,58 beträgt.

6. Homokinetisches Gelenk nach einem der Ansprüche 1 bis 5, **dadurch gekennzeichnet, dass** das Verhältnis des Durchmessers DSR der Lauffläche (10) zum Außendurchmesser DAE der Welle, viertes Verhältnis des Gelenks genannt, größer als 0,86 ist und vorzugsweise zwischen 0,86 und 0,91 beträgt.

7. Homokinetisches Gelenk nach einem der Ansprüche 1 bis 6, **dadurch gekennzeichnet, dass** zwischen jeder Lauffläche (10) und jeder Rolle (32) Nadeln (38) angeordnet sind und dass das Verhältnis der Länge LA der Nadeln (38) zum Durchmesser DSR der Lauffläche (10), fünftes Verhältnis des Gelenks genannt, mindestens 0,56 und kleiner als 0,61 und vorzugsweise kleiner als 0,58 ist.

8. Homokinetisches Gelenk nach einem der Ansprüche 1 bis 7, **dadurch gekennzeichnet, dass** die Rolle (32) einen Außenradius RGE besitzt, dass jede Bahn (22, 24) einen Querschnitt mit einem Radius RP hat und dass das Verhältnis des Außenradius RGE der Rolle zu den Radien RP der Querschnitte, sechstes Verhältnis des Gelenks genannt, kleiner als 1, vorzugsweise kleiner als 0,997 und insbesondere kleiner als 0,93 ist.

9. Homokinetisches Gelenk nach einem der Ansprüche 1 bis 8, **dadurch gekennzeichnet, dass** das Aufnahmeelement (20) einen kleinen Innendurchmesser DFP definiert, der das Zweifache des Innenradius von Teilen (23) ist, die sich zwischen zwei benachbarten Paaren von Bahnen (22, 24) erstrecken, und dass das Verhältnis des Durchmessers DFP zum Außendurchmesser der Welle DAE, siebtes Verhältnis des Gelenks genannt, zwischen 1,83 und 1,92 beträgt.

10. Homokinetisches Gelenk nach einem der Ansprüche 1 bis 9, **dadurch gekennzeichnet, dass** die Rolle (32) nur in Drehung um die zweite Achse (Y-Y) und längs dieser Achse beweglich ist.

11. Homokinetisches Gelenk nach Anspruch 10, **dadurch gekennzeichnet, dass** die Rolle (32) eine im Wesentlichen zylindrische Innenfläche (36) umfasst und dass die Lauffläche (10) des Drehzapfens (8) eine im Wesentlichen zylindrische Fläche ist.

12. Homokinetisches Gelenk nach den Ansprüchen 7 und 11, **dadurch gekennzeichnet, dass** die Nadeln (38) einerseits auf der Lauffläche (36) der Rolle (32) und andererseits auf der Lauffläche (10) des Drehzapfens (8) rollen.

13. Homokinetisches Gelenk nach einem der Ansprüche 1 bis 12, **dadurch gekennzeichnet, dass** der Drehzapfen (8) und die Lauffläche (10) bezüglich der ersten Achse (X-X) feststehend sind.

14. Homokinetisches Gelenk nach einem der vorhergehenden Ansprüche, **dadurch gekennzeichnet, dass** das Gelenk ein Tripoden-Gelenk ist.
